Europäisches Patentamt

European Patent Office

Office européen des brevets

(19)

(11) Veröffentlichungsnummer: **0 101 015**
**A1**

(12) **EUROPÄISCHE PATENTANMELDUNG**

(21) Anmeldenummer: 83107653.4

(22) Anmeldetag: 03.08.83

(51) Int. Cl.³: **F 16 F 15/12**

(30) Priorität: 10.08.82 DE 3229782

(43) Veröffentlichungstag der Anmeldung:
22.02.84 Patentblatt 84/8

(84) Benannte Vertragsstaaten:
DE FR GB

(71) Anmelder: METZELER KAUTSCHUK GMBH
Gneisenaustrasse 15
D-8000 München 50(DE)

(72) Erfinder: Wagner, Bernd
Juchaczstrasse 56
D-5410 Höhr-Grenzhausen(DE)

(74) Vertreter: Michelis, Theodor, Dipl.-Ing.
Gneisenaustrasse 15
D-8000 München 50(DE)

(54) Torsionsschwingungstilger.

(57) Bei einem Torsionsschwingungstilger, wie er insbesondere für die Kurbelwellen von Kraftfahrzeugen eingesetzt wird, sind zwischen Anschlagflächen von Schwungring und Nabe mindestens zwei zueinander parallele Schichten aus elastomerem Material angeordnet, die entweder voneinander gestrennt oder über einen Übergangsbereich miteinander verbunden sind. Diese unterschiedlichen Schichten aus dem elastomeren Material vergrößern die Verdrehsteifigkeit der Schicht, so daß bei gleicher Eigenfrequenz eine Erhöhung des Massentragheitsmomentes ermöglicht wird. Außerdem kann durch gezielte Einstellung einer Vorspannung der Schicht aus dem elastomeren Material die Eigenfrequenz des Torsionsschwingungstilgers gezielt beeinflußt werden. Zudem wird infolge von Druck- statt Zugspannungen das Beanspruchungsprofil auf die elastomeren Schichten positiver gestaltet.

FIG. 1

METZELER KAUTSCHUK GMBH

Torsionsschwingungstilger

Die Erfindung betrifft einen Torsionsschwingungstilger der im Oberbegriff des Anspruchs 1 angegebenen Gattung.

Solche Torsionsschwingungstilger werden insbesondere zur Tilgung und Dämpfung der Kurbelwellen von Kraftfahrzeugen eingesetzt, wobei diese Schwingungstilger wegen der auftretenden hohen Drehzahlen und Drehschwingungsfrequenzen bzw. -Amplituden eine ausreichende mechanische Festigkeit und außerdem eine hohe Tilgerwirkung haben müssen. Die Tilgerwirkung hängt wiederum von dem Massenträgheitsmoment des Schwungrings ab, im wesentlichen also von der Masse und der radialen Lage des Schwungrings. Eine erhebliche Vergrößerung des Massenträgheitsmomentes des Schwungrings, also im allgemeinen der Masse und/oder der radialen Lage des Schwungrings, bedingt wiederum eine entsprechend höhere Verdrehsteifigkeit der Schicht aus dem elastomeren Material, da sonst die spezifische Spannung in dieser Schicht die zulässigen Grenzwerte überschreitet und damit die ausreichende mechanische Festigkeit nicht mehr gewährleistet ist, also die Gefahr besteht, daß der Schwungring sich beim Auftreten hoher Belastungen löst.

Außerdem führt eine Erhöhung des Massenträgheitsmomentes ohne entsprechende Steigerung der Verdrehsteifigkeit zu einer Verringerung der Eigenfrequenzen des Systems "Torsionsschwingungstilger", so daß sich nicht mehr der

- 2 -

angestrebte Tuningpunkt für die optimale Tilgerwirkung erreichen läßt.

Der Erfindung liegt deshalb die Aufgabe zugrunde, einen Torsionsschwingungstilger der angegebenen Gattung zu schaffen, bei dem die oben erwähnten Nachteile nicht auftreten.

Insbesondere soll ein Torsionsschwingungstilger vorgeschlagen werden, bei dem Schwungringe mit hohem Massenträgheitsmoment verwendet werden können, ohne daß die Gefahr einer Überschreitung der Grenzwerte für die spezifische Spannung der Schicht aus dem elastomeren Material besteht.

Dies wird erfindungsgemäß durch die im kennzeichnenden Teil des Anspruchs 1 angegebenen Merkmale erreicht.

Zweckmäßige Ausführungsformen sind in den Unteransprüchen zusammengestellt.

Die mit der Erfindung erzielten Vorteile beruhen insbesondere darauf, daß mindestens zwei Schichten aus elastomerem Material verwendet werden, so daß sich insgesamt eine relevante Erhöhung der Verdrehsteifigkeit dieser Zwischenschicht zwischen der Nabe und dem Schwungring ergibt. Die verschiedenen Schichten aus dem elastomeren Material können entweder voneinander getrennt sein, wobei z.B. zwei Schichten aus elastomerem Material durch Einschießen mit der Nabe und dem Schwungring verbunden werden, oder einstückig ausgebildet sein, wobei sich das Vulkanisations-Haftverfahren für die Befestigung dieser Schicht anbietet.

Werden beispielsweise zwei getrennte Schichten aus elastomerem Material, die in radial unterschiedlichen Abständen angeordnet sind und parallel zur Welle verlaufen, durch Haften und Einschießen zwischen der Nabe und dem Schwungring befestigt, so besteht die Möglichkeit, durch entsprechende Auswahl der Abmessungen der beiden Schichten, der Nabe und des Schwungrings, d.h., der Spalte zwischen diesen beiden Teilen, den beiden Schichten aus dem elastomeren Material eine definierte Vorspannung, die beispielsweise zwischen Null und 50 % eingestellt werden kann, und damit eine entsprechende Verdrehsteifigkeit zu geben. Diese bewußte Beeinflussung der Vorspannung und der Verdrehsteifigkeit führt wiederum zu einer entsprechenden Änderung der Eigenfrequenz des Torsionsschwingungstilgers, d.h., ohne Änderung des Massenträgheitsmomentes, im wesentlichen der Masse des Schwungrings, läßt sich die Eigenfrequenz des Torsionsschwingungstilgers je nach Bedarf variieren.

Diese Beeinflussung der Eigenfrequenz ist auch dann möglich, wenn die Schichten aus dem elastomeren Material vulkanisationsgehaftet, also nicht eingeschossen werden. Zu diesem Zweck kann nämlich eine zusätzliche Vorspannplatte vorgesehen werden, die beispielsweise durch einen Blechring gebildet wird. Ein Schenkel dieses Blechrings liegt an einer Schicht aus dem elastomeren Material an, so daß bei einer entsprechenden Verformung des Schenkels die nach dem Fertigungsprozeß eventuell vorhandene Schrumpf- oder Zugspannung in den Schichten aus dem elastomeren Material in eine definierte Druckspannung umgewandelt wird, die einerseits zu günstigeren Beanspruchungen der Schichten aus dem elastomeren Material führt und andererseits eine Beeinflussung der Eigenfrequenz des Torsionsschwingungstilgers ohne Änderung seines Massen- trägheitsmomentes ermöglicht.

- 4 -                                    0101015

Die Erfindung wird im folgenden anhand von Ausführungsbeispielen unter.Bezugnahme auf die beiliegenden, schematischen Zeichnungen näher erläutert. Es zeigen:

Fig. 1    einen Schnitt durch eine erste Ausführungsform
          eines Torsionsschwingungstilgers mit zwei getrennten Schichten aus elastomerem Material,
          und

Fig. 2    einen Schnitt durch eine zweite Ausführungsform
          eines Torsionsschwingungstilgers mit zwei miteinander verbundenen Schichten aus elastomerem
          Material.

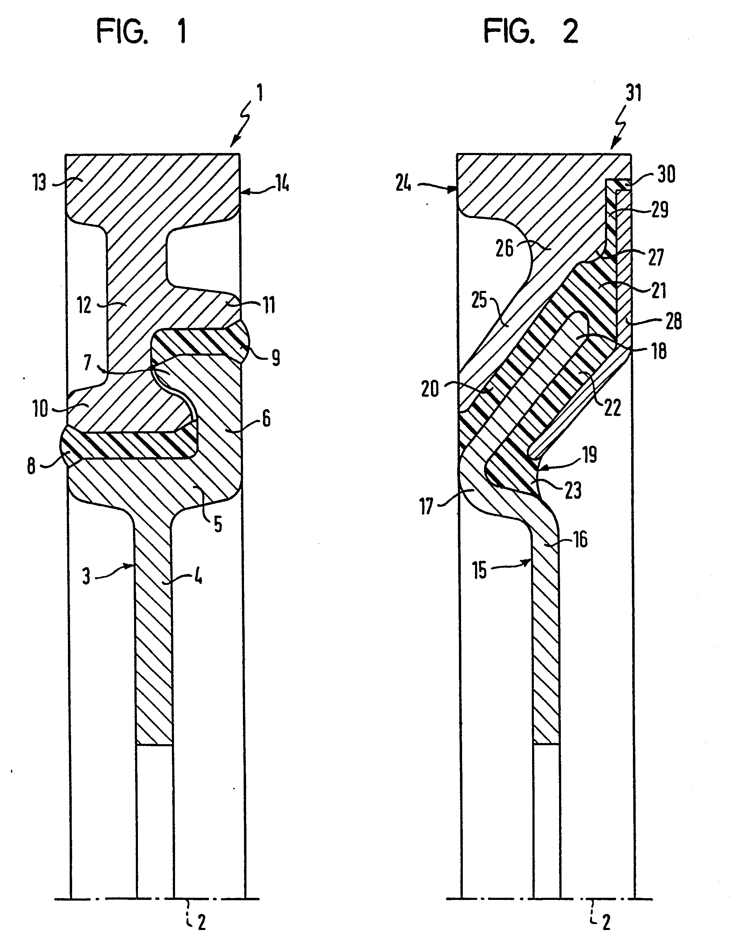

Der allgemein durch das Bezugszeichen 1 gekennzeichnete
Torsionsschwingungstilger nach Fig. 1 besteht aus einer
Nabe 3, die auf der schematisch angedeuteten Welle 2
sitzt. Die Nabe 3 beinhaltet einen inneren, radialen,
scheibenförmigen Bereich 4 und einen äußeren, verbreiterten Bereich 5, der im folgenden auch als "Nabenkopf"
bezeichnet werden soll. An diesen symmetrischen Aufbau
der Nabe 3 aus dem scheibenförmigen Bereich 4 und dem
Nabenkopf 5 schließt sich ein asymmetrischer Bereich an,
nämlich ein Vorsprung 6 auf einer Seite des Nabenkopfes,
der auf der gemäß der Darstellung in Fig. 1 linken Seite
mit einem Wulst 7 versehen ist.

Die radial äußere, freiliegende, parallel zur Welle 2
verlaufende Fläche des Nabenkopfes 5 dient als Anlagefläche für eine axiale, innere Schicht 8 aus elastomerem
Material, die an ihrem gemäß der Darstellung in Fig. 1
linken Ende freiliegt und  an ihrem rechten Ende an die
linke Seitenwand des Vorsprungs 6 anstößt.

In entsprechender Weise liegt auf der radial äußeren, freien Oberfläche des Vorsprungs 6 einschließlich des Wulstes 7 eine axiale äußere Schicht 9 aus elastomerem Material auf.

Der allgemein durch das Bezugszeichen 14 angedeutete Schwungring weist einen Fuß 10 auf, dessen radial innere Fläche auf der inneren axialen Schicht 8 aus dem elastomeren Material aufliegt und dessen gemäß der Darstellung in Fig. 1 rechte Seitenfläche eine Form hat, die der Form des Vorsprungs 6 einschließlich des Wulstes 7 angepaßt ist, also in die durch den Wulst 7 gebildete Aussparung des Vorsprungs 6 paßt.

An diesen Fuß 6 schließt sich ein radial verlaufender, scheibenförmiger Bereich 12 an, der mit einer gemäß der Darstellung in Fig. 1 nach rechts verlaufenden Nase 11 versehen ist, die mit ihrer inneren radialen Fläche/der auf äußeren axialen Schicht 9 aus dem elastomeren Material aufliegt.

Radial außen endet der Schwungring 14 dann in einer Verbreiterung 13, die im folgenden auch als "Kopf" bezeichnet werden soll.

Ein solcher Torsionsschwingungstilger 1 wird auf folgende Weise hergestellt: Zunächst werden die Nabe 3 und der Schwungring 14 angefertigt und in die aus Fig. 1 ersichtlichen Lagen gebracht, so daß Spalte zwischen dem Nabenkopf 5 und dem Fuß 10 des Schwungrings einerseits sowie zwischen der oberen Fläche des Vorsprungs 6 und der Nase 11 des Schwungrings 14 andererseits entstehen.

Die Anlageflächen der elastomeren Schichten 8 und 9 werden mit einem Haftvermittler versehen.

In diese Spalte werden dann die beiden Schichten 8 und 9 aus elastomerem Material "eingeschossen", also auf die übliche Weise, beispielsweise durch Rütteln oder axiales Einpressen, in diese Spalten eingebracht.

Durch entsprechende Abstimmung der Abmessungen dieser Spalte, insbesondere ihrer Dicke, aber auch ihrer Länge, sowie der Dicke und der Länge der beiden elastomeren Schichten 8 und 9 läßt sich die Vorspannung der elastomeren Schichten zwischen Null und etwa 50 % einstellen, wodurch sich wiederum eine genau definierte Verdrehsteifigkeit der Schichten ergibt; durch diese Beeinflussung der Verdrehsteifigkeit wird es wiederum möglich, ohne Änderung von Nabe und Schwungring die Eigenfrequenz eines solchen Torsionsschwingungstilgers zu beeinflussen.

Der in Fig. 2 dargestellte und allgemein mit dem Bezugszeichen 31 versehene Torsionsschwingungstilger weist ebenfalls eine auf der Welle 2 sitzende Nabe 15 auf, die aus einem radial nach außen verlaufenden, scheibenförmigen Bereich 16 und einem anschließenden, S-förmigen Bereich 17 besteht. Der scheibenförmige Bereich 16 geht also in einen S-förmigen Knick 17 über, an den sich ein geradliniger Endbereich 18 anschließt, der unter einem Winkel von ca. 45$^{\circ}$ zur Achse der Welle 2 verläuft.

Um diesen geradlinigen Endbereich 18 der Nabe 15 werden die beiden Schenkel 20 und 22 einer U-förmigen Schicht aus elastomerem Material vulkanisiert, die über einen radialen Übergangsbereich 21 miteinander verbunden sind.

Diese einstückige, allgemein durch das Bezugszeichen 19 angedeutete Schicht aus dem elastomeren Material weist einen Fuß 23 auf, der sich im Bereich 17 der Nabe 15 befindet. An diesen Fuß 23 schließt sich der Schenkel 22 an, der über den Übergang 21 mit dem Schenkel 20 verbunden
ist. Die beiden Schenkel schließen also den Endbereich 18
der Nabe zwischen sich ein.

An der radial äußeren, freiliegenden Fläche des Schenkels
20 liegt ein plattenförmiger, ebenfalls schräg zur Welle
2 verlaufender Bereich 25 eines allgemein durch das Bezugszeichen 24 angedeuteten Schwungrings an. Dieser plattenförmige  schräge Bereich 25 läuft in einen verbreiterten Endbereich 26 aus, der im folgenden auch als "Kopf"
bezeichnet werden soll.

An ihrem radial äußeren Ende ist die Schicht 19 aus dem
elastomeren Material mit einer dünnen, plattenförmigen
Verlängerung 29 versehen, die etwa eine Dicke von 0,5
bis 1 mm hat, also aufgrund ihrer geringen Dicke eine
relativ große Steifigkeit aufweist. An ihrem radial
äußeren Ende läuft diese Verlängerung 29 in ein kurzes
Endstück 30 aus, das parallel zur Achse der Welle 2 angeordnet ist. Diese Verlängerung mit den beiden Teilen
29 und 30 hat also etwa die Form eines rechtwinkligen
Hakens und stellt die Anbindung der Vorspannplatte 28
an den Schwungring 24 dar.

Die gemäß der Darstellung in Fig. 2 linke und obere Fläche
der Verlängerung aus den beiden Teilen 29 und 30 ist
durch Haften fest mit der entsprechenden Anlagefläche
des Schwungrings 24 verbunden, der in diesem Bereich
eine Aussparung entsprechender Form aufweist.

Der Blechring 28 kann alternativ durch Schweißen/Löten/
Nieten am Schwungring 24 im Bereich der Aussparung verbunden sein.

Die hakenförmige Verlängerung der Schicht 19 aus dem elastomeren Material bildet also eine Aussparung, in die ein geknickter Blechring 28 eingesetzt und durch Haften mit dem elastomeren Material dieser Verlängerung bzw. des Übergangs 21 und des Schenkels 22 verbunden ist. Dieser Blechring 28 wird durch Haften fest an dem radial verlaufenden Bereich 28 der Verlängerung, dem Übergang 21 und der freiliegenden Fläche des Schenkels 22 angebracht. Das untere Ende dieses Blechrichgs 28 liegt etwa in der Nähe des Fußes 23.

Ein solcher Torsionsschwingungstilger 31 wird auf folgende Weise hergestellt: Zunächst wird um den Endbereich 18 der Nabe 15 die U-förmige Schicht 19 aus dem elastomeren Material vulkanisiert, wodurch sich der Schwungring 24, nämlich sein plattenförmiger Bereich 25, mit der äußeren Fläche des Schenkels 20 verbindet. Die Befestigung erfolgt jeweils durch das auf diesem Gebiet übliche Haften.

Gleichzeitig wird auch die radiale Verlängerung 29 und das Ende 30 durch Haften fest in der entsprechenden Aussparung des Schwungrings 24 angebracht. Da, wie erwähnt, die Verlängerung 29, 30 eine sehr geringe Dicke hat, kommt in diesem Bereich die Elastizität des Materials praktisch nicht zur Wirkung, so daß sich eine steife Anbindung ergibt.

Gleichzeitig wird der Blechring 28 mit seinem oberen Ende durch Haften an dem Endbereich 29 und der Verlängerung 30 und über die Schichten 21 und 22 an dem Nabenbereich 18 befestigt. Gemäß der Darstellung in Fig. 2 wird der Ring 28 um den Eckbereich 27 des Schwungrings 24 nach links gebogen, so daß er im Querschnitt etwa die Form eines zweifach geknickten Bumerangs erhält und gleichzeitig der Übergang 21 und die Schenkel 20 und 22 der Schicht 19 aus dem elastomeren Material in Druckspannungsbereiche kommen, wobei sich die Nabe 15 nach
links verschiebt.

Wie man in Fig. 2 erkennen kann, liegt nach dieser Verformung das untere Ende des nun zweifach abgewinkelten
Blechrings 28 in einer entsprechenden Aussparung am Fuß
23 der Schicht 19 aus dem elastomeren Material.

Wie sich aus der obigen Beschreibung ergibt, wird also
bei diesem Torsionsschwingungstilger 31 die Schicht 19
vulkanisiert gehaftet, also nicht eingeschossen, so daß
sich nach der Fertigung im allgemeinen Schrumpf- oder
Zugspannungen in der Schicht 19 ergeben. Diese Spannungen
werden durch die gezielte Verformung des Blechrings 28
und das damit erzielte Zusammendrücken der Schicht 19 in
Druckspannungen umgewandelt, die zu günstigeren Beanspruchungen der Schicht 19 führen. Außerdem kann dadurch
eine gewisse Vorspannung eingestellt werden, mit der
sich wiederum die Eigenfrequenz des Torsionsschwingungstilgers 31 einstellen läßt, wie bereits oben erörtert
wurde.

Die Verwendung der Verlängerung 29, 30 bietet alternativ
neben Schweißen/Löten/Nieten die Möglichkeit, den Blechring 28 fest mit dem Schwungring 24 zu verbinden, indem
die üblichen Haftmethoden verwendet werden. Die harte
Anbindung aufgrund der Verwendung einer extrem dünnen
Schicht aus elastomerem Material in diesem Bereich unterdrückt praktisch die elastischen Eigenschaften des
Materials.

MK 315 P 82 EP

METZELER KAUTSCHUK GMBH

Patentansprüche

1.    Torsionsschwingungstilger
a) mit einer auf einer Welle sitzenden Nabe,
b) mit einem die Nabe umgebenden Schwungring und
c) mit einer ringförmigen Schicht aus einem elastomeren
Material zwischen der Nabe und dem Schwungring,
d a d u r c h   g e k e n n z e i c h n e t ,   daß
e) mindestens zwei zueinander parallele Schichten (8, 9;
20, 22) aus elastomerem Material zwischen den Anlageflächen des Schwungrings (14, 24) und der Nabe (3, 15) fest
haftend angeordnet sind.

2.    Torsionsschwingungstilger nach Anspruch 1, dadurch
gekennzeichnet, daß zwei getrennte, zu der Welle (2)
parallele Schichten (8, 9) aus elastomerem Material vorgesehen sind.

3.    Torsionsschwingungstilger nach Anspruch 2, dadurch
gekennzeichnet, daß die radial innere Schicht (8) aus
dem elastomeren Material zwischen einer Anlagefläche am
Nabenkopf (5) und einer Anlagefläche am Fuß (10) des
Schwungrings (14) angeordnet ist.

4.    Torsionsschwingungstilger nach Anspruch 3, dadurch
gekennzeichnet, daß der Nabenkopf (5) auf einer Seite
einen radialen Vorsprung (6) und der Schwungring (14)
eine seitlich vorstehende Nase (11) aufweisen, und
daß die radial äußere Schicht (9) aus dem elastomeren
Material zwischen einer Anlagefläche des Vorsprungs (6)
und einer Anlagefläche der Nase (11) angeordnet ist.

5. Torsionsschwingungstilger nach Anspruch 1, dadurch gekennzeichnet, daß zwei einstück miteinander ausgebildete Schichten (20, 22) aus elastomerem Material vorgesehen sind.

6. Torsionsschwingungstilger nach Anspruch 5, dadurch gekennzeichnet, daß die beiden Schichten (20, 22) aus dem elastomeren Material in U-Form angeordnet sind, wobei die beiden Schenkel des U unter einem bestimmten Winkel zur Welle (2) verlaufen.

7. Torsionsschwingungstilber nach Anspruch 6, dadurch gekennzeichnet, daß sich zwischen den beiden Schenkeln (20, 22) des U ein radialer Bereich elastomeren Materials (21) befindet.

8. Torsionsschwingungstilger nach einem der Ansprüche 5 bis 7, dadurch gekennzeichnet, daß die beiden einstückig miteinander verbundenen Schichten (20, 22) aus dem elastomeren Material einen radial äußeren, hakenförmigen Endbereich (29) aufweisen.

9. Torsionsschwingungstilger nach Anspruch 8, dadurch gekennzeichnet, daß der hakenförmige Endbereich (29) eine geringe Dicke in der Größenordnung von etwa 0,5 bis 1 mm hat und somit hohe Steifigkeit aufweist.

10.    Torsionsschwingungstilger nach einem der Ansprüche
8 oder 9,   dadurch gekennzeichnet,   daß an dem hakenförmigen Endbereich (29) eine Vorspannplatte (28) für die
Verformung der Schicht (20, 21, 22) aus dem elastomeren
Material angebracht ist.

11.    Torsionsschwingungstilger nach Anspruch 10, dadurch
gekennzeichnet,   daß die Vorspannplatte (28) durch Haften an dem hakenförmigen Endbereich (29) angebracht ist
und ihr Querschnitt im verformten Zustand etwa die Form
eines zweifach geknickten Bumerangs hat, dessen Innenfläche an den Schichten (21, 22) aus dem elastomeren
Material anliegt.

12.    Torsionsschwingungstilger nach Anspruch 11, dadurch
gekennzeichnet,   daß statt des hakenförmigen Endbereichs
(29) eine feste Verbindung in Form einer Lötung,·Schweissung, Nietung zwischen Vorspannplatte (28) und Schwungring (24) besteht.

13.    Torsionsschwingungstilger nach einem der Ansprüche
11 oder 12,   dadurch gekennzeichnet,   daß infolge bleibender Verformung der Vorspannplatte (28) um den Eckpunkt
(27) des Schwungrings (24) die nach Vulkanisation und
Abkühlung entstehenden Schrumpfspannungen der elastomeren
Schichten (20, 21, 22) aufgehoben bzw. in Druckspannungen verwandelt werden.

0101015

FIG. 1

FIG. 2

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 311 228 (WALLACE MURRAY)<br>* Insgesamt * | 1-4 | F 16 F 15/12 |
| X | FR-A-2 426 842 (WALLACE MURRAY)<br><br>* Insgesamt * | 1,5,6,<br>7 | |
| A | FR-A-2 341 073 (C. FREUNDENBERG)<br>* Insgesamt * | 1-4 | |
| A | US-A-3 314 304 (R.H. KATZENBERGER et al.)<br>* Insgesamt * | 1-4 | |

---

RECHERCHIERTE
SACHGEBIETE (Int. Cl. ³)

F 16 F

Der vorliegende Recherchenbericht wurde für alle Patentansprüche erstellt.

| Recherchenort | Abschlußdatum der Recherche | Prüfer |
|---|---|---|
| DEN HAAG | 06-09-1983 | CINQUANTINI B. |